# EUROPEAN PATENT APPLICATION

(11) **EP 1 186 428 A1**
(43) Date of publication of application: **13.03.2002**
(21) Application number: 01912382.7
(22) Date of filing: 15.03.2001
(51) Int. Cl.: B41J 2/45

(54) **OPTICAL PRINTER HEAD AND METHOD OF LIGHTING IT**

(30) Priority: 16.03.2000 JP 2000073530
(71) Applicant: Nippon Sheet Glass Co., Ltd., Osaka-shi, Osaka 541-8559 (JP)
(72) Inventor: OHNO, Seiji, c/o Nippon Sheet Glass Co., Ltd., Osaka-shi, Osaka 541-0041 (JP); KUSUDA, Yukihisa, c/o Nippon Sheet Glass Co., Ltd., Osaka-shi, Osaka 541-0041 (JP); YOSHIDA, Harunobu, c/o Nippon Sheet Glass Co., Ltd, Osaka-shi, Osaka 541-0041 (JP); YAMASHITA, Ken, c/o Nippon Sheet Glass Co., Ltd., Osaka-shi, Osaka 541-0041 (JP)
(74) Representative: Wilson Gunn M'Caw
(86) International application number: JP0102043
(87) International publication number: WO0168373

(57) **Abstract**

An optical printer head is provided in which light exposure of one pixel may be increased. An optical printer head for exposing a photosensitive drum to form pixels thereon comprises a light-emitting element array including two or more lines of light-emitting points, and a rod-lens array for projecting light emitted from the light-emitting array onto the photosensitive drum to form a line of light spots. Each of the lines of light-emitting points has the same pitch in a main-scanning direction in parallel with an axis of rotation of the photosensitive drum, and the light-emitting points of respective lines of light-emitting points are arranged so as to be lined up in a sub-scanning direction perpendicular to the axis of rotation of the photosensitive drum.

## Description

### TECHNICAL FIELD

The present invention relates to an optical printer head, in particular to an optical printer head including two or more lines of light-emitting points. The present invention further relates to a method of lighting up the optical printer head.

### BACKGROUND ART

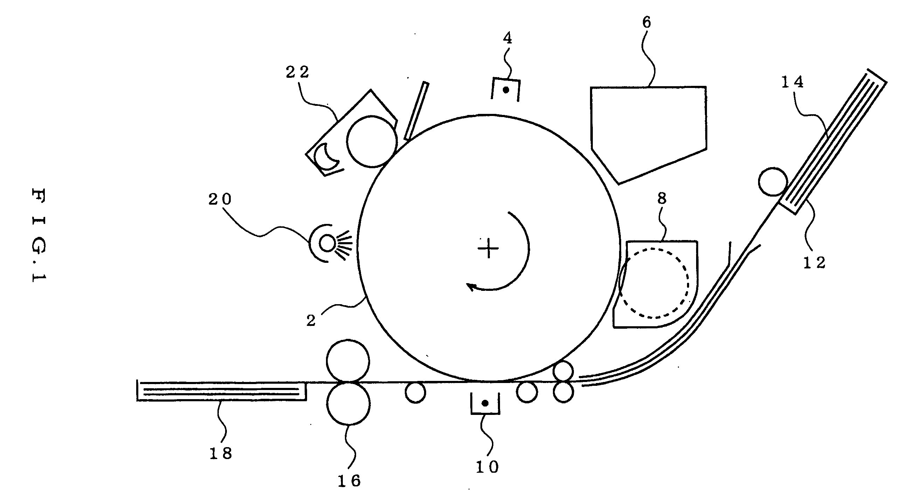

A writing head of an optical printer, i.e. an optical printer head is a light source for exposing a photosensitive drum and comprises a line of light-emitting points consisting of a light-emitting element array. The structure of an optical printer including an optical printer head is shown in Fig.1. An optically conductive material (photosensitive material) such as amorphous Si is provided on the surface of a cylindrical drum 2, which is rotated at the printing speed. The surface of the photosensitive material is uniformly charged with an electrostatic charger 4. Then, light corresponding to a dot image being printed with an optical print head 6 is projected onto the surface of the photosensitive material to neutralize the charge on the area to which the light is projected. Next, a developer 8 deposits the toner on the photosensitive material surface in accordance with the charged pattern on the photosensitive material surface. The transfer unit 10 transfers the toner on a paper sheet 14 fed from a cassette 12. The toner on the paper sheet is thermally fixed by the heat applied by a fixer 16, and the paper is sent to a stacker 18. Upon completion of transfer, on the other hand, the charge on the drum is neutralized over the entire surface with an erasing lamp 20, and the remaining toner is removed by a cleaner 22.

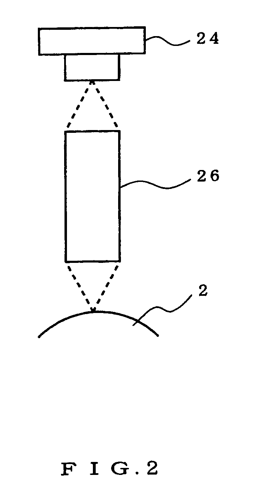

The construction of the optical print head 6 is shown in Fig.2. This optical print head comprises a light-emitting element array 24 and a rod-lens array 26, and the lens is adapted so as to focus on the photosensitive drum 2.

In a conventional optical printer head, an array of light-emitting points consists of one line of light-emitting elements. The optical printer head including such one line of light-emitting points has following problems.
(1) The light exposure of one pixel is determined by the amount of light of one light-emitting point lighted up. Therefore, the light exposure of one pixel may not be increased by the optical printer head consisting of one line of light-emitting points.
(2) In the optical printer head including one line of light-emitting points, the density of pixels is determined by the array pitch of light-emitting points. Also, the array pitch of light-emitting points is limited by the manufacturing condition of a light-emitting element array. Therefore, there is a limitation for increasing the density of pixels in the optical printer head including one line of light-emitting points.
(3) The light emitted from the light-emitting element array is projected onto the lightsensitive drum through a rod-lens array. At this time, if the rod-lens array has undulation in the array direction thereof, a line of light spots formed after passing through the rod-lens array may deviate from a straight line.
(4) While a light-emitting element array is fabricated by arraying a plurality of light-emitting element array chips, a line of light spots may deviate from a straight line due to the inclined attachment of the chips.

### DISCLOSURE OF THE INVENTION

An object of the present invention is to provide an optical printer head in which light exposure of one pixel may be increased.

Another object of the present invention is to provide an optical printer head in which the density of pixels may be increased.

A further object of the present invention is to provide an optical printer head in which the deviation of a line of light spots on a photosensitive drum may be corrected.

A still further object of the present invention is to provide a method of lighting up in such an optical printer head.

According to the first aspect of the present invention, an optical printer head for exposing a photosensitive drum to form pixels thereon is provided, which comprises a light-emitting element array including two or more lines of light-emitting points, and a rod-lens array for projecting light emitted from the light-emitting array onto the photosensitive drum to form a line of light spots.

It is preferable that each of the lines of light-emitting points has the same pitch in a main-scanning direction in parallel with an axis of rotation of the photosensitive drum, and the light-emitting points of respective lines of light-emitting points are arranged so as to be lined up in a sub-scanning direction perpendicular to the axis of rotation of the photosensitive drum, or the light-emitting points of respective lines of light-emitting points are arranged so as to be shifted in the main-scanning direction.

Each of lines of light-emitting points may be composed of an array of light-emitting diodes or an array of three-terminal light-emitting thyristors. The array of three-terminal light-emitting thyristors may be composed of a light-emitting portion of a self-scanning light-emitting element array.

The self-scanning light-emitting element array comprises a transfer portion having such a construction that a plurality of three-terminal light-emitting thyristor each having such a construction that a plurality of transfer elements each having a control electrode for controlling threshold voltage or current for transfer operation are arranged as transfer elements, said control electrodes of said transfer elements are connected to the control electrode of at least one transfer element located in the vicinity thereof via an electrically unidirectional electrical element, power-supply lines are connected to said transfer elements by load resistors, and clock pulse lines are connected to the transfer element ; and a light-emitting portion having such a construction that a plurality of three-terminal light-emitting thyristor each having a control electrode for controlling threshold voltage or current are arranged as light-emitting elements, the control electrodes of said light-emitting element are connected to the control electrodes of the transfer elements by electrical means, and lines for applying current for light emission to the light-emitting element are provided.

According to the second aspect of the present invention, in an optical printer head comprising a light-emitting element array including two or more lines of light-emitting points, and a rod-lens array for projecting light emitted from the light-emitting array onto the photosensitive drum to form a line of light spots, wherein each of the lines of light-emitting points has the same pitch in a main-scanning direction in parallel with an axis of rotation of the photosensitive drum, and the light-emitting points of respective lines of light-emitting points are arranged so as to be lined up in a sub-scanning direction perpendicular to the axis of rotation of the photosensitive drum, a method of lighting up the light-emitting points comprises a step of selecting the lighting up of a plurality of light-emitting points lined up in the sub-scanning direction to vary the accumulated amount of light of the pixels. In this case, the amounts of light of the light-emitting points in the two or more lines of light-emitting points are all the same, or are varied every a line of light-emitting points.

It is also preferable to select the lighting up the light-emitting points in the two or more lines of light-emitting points to correct the deviation of the line of light spots on the photosensitive drum.

### BRIEF DESCRIPTION OF THE DRAWINGS

Fig.1 is a schematic diagram of an optical printer comprising an optical printer head.
Fig.2 is a schematic diagram of the structure of an optical printer head.
Fig.3 is a schematic diagram of a light-emitting diode array chip comprising two lines of light-emitting points.
Fig.4 is a schematic diagram showing the situation where the photosensitive drum is exposed during the drum is rotated.
Fig.5 is a schematic diagram showing another situation where the photosensitive drum is exposed during the drum is rotated.
Fig.6 is a schematic diagram of an another example of light-emitting diode array chip used in an optical printer head.
Fig.7 is a schematic diagram showing the situation where a line of light spots deviate from a straight line due to the influence by undulation of the rod-lens array.
Fig.8 is a schematic diagram showing an example of correction for the deviation of a line of light spots shown in Fig.7.
Fig.9 is an equivalent circuit diagram of a self-scanning light-emitting element array.
Fig.10 is a schematic diagram of the self-scanning light-emitting element array chip shown in Fig.9.

### BEST MODE FOR CARRYING OUT THE INVENTION

The embodiments of the present invention will now be described with reference to the drawings.

### Embodiment 1

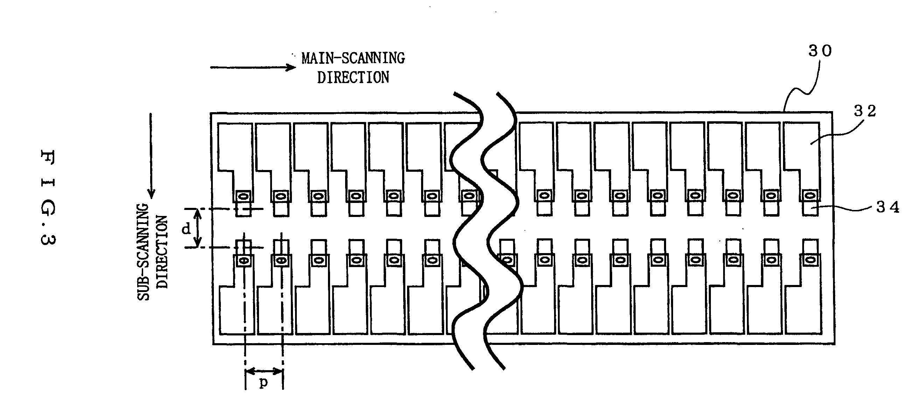

Referring to Fig.3, there is shown a light-emitting diode (LED) array chip 30 comprising two lines, i.e. a first and second lines of light-emitting point. In the figure, reference numeral 32 designates a bonding pad and 34 a light-emitting point. "p" denotes the array pitch of light-emitting points in a main-scanning direction, and "d" the pitch of light-emitting points in a sub-scanning direction. Herein, the main-scanning direction is a direction in parallel with an axis of rotation of the photosensitive drum, and the sub-scanning direction is a direction perpendicular to the axis of rotation of the drum. It should be noted that "d" is selected so as to be integral multiples of resolution in a sub-scanning direction.

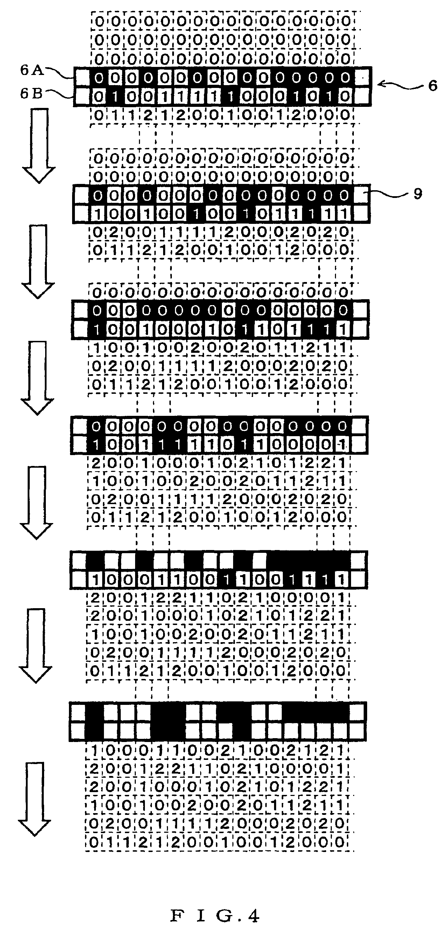

An example of exposure with a printer head 6 comprising two lines of light-emitting points is illustrated with reference to Fig.4. In the figure, 6A and 6B designate a first and second lines of light-emitting points, respectively. It is assumed that the amounts of light of respective light-emitting points of the first and second lines are the same. Fig.4 shows the situation where the photosensitive drum is exposed with the two lines of light-emitting points during the rotation of the drum in a sub-scanning direction. In the figure, one block 9 designates one pixel, and a darken block in the optical printer head denotes a light-emitting point lighted up. Numeral "0" denotes a pixel which was no exposed, "1" a pixel which was exposed one time, and "2" a pixel which was exposed two times, respectively. As apparent from the figure, one time exposure is carried out by the first line of the light-emitting points 6A, and two time exposures are carried out at first by the first line of the light-emitting points 6A and then by the second line of the light-emitting points 6B. It is appreciated that the exposure state of three steps for a pixel, i.e. "0", "1" and "2" may be formed by use of the head comprising two lines of light-emitting points.

According to the optical printer head of this embodiment, the printing speed may be increased by two times compared with the conventional optical printer head comprising one line of light-emitting points, because the accumulated light exposure on a pixel becomes at maximum two time that of the conventional one.

While the optical printer head comprising two lines of light-emitting points is illustrated in the embodiment described above, three or more lines of light-emitting points may be used.

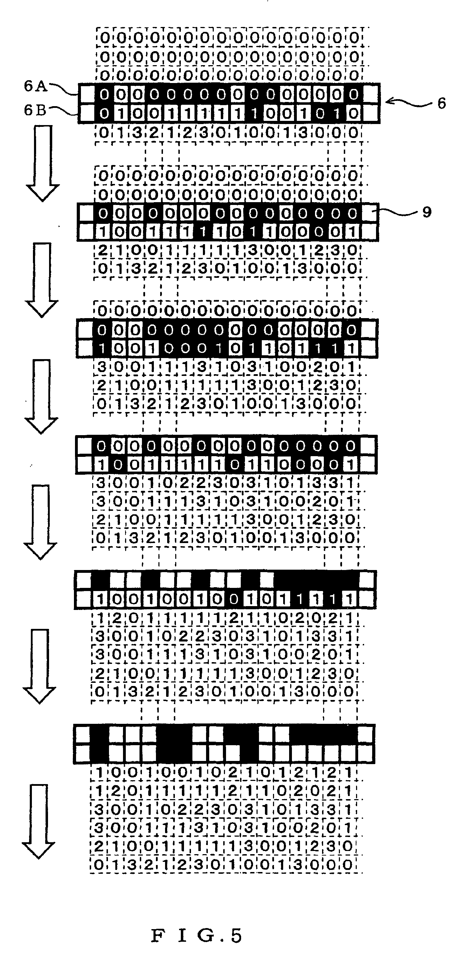

Another example of exposure with a printer head comprising two lines of light-emitting points is illustrated with reference to Fig.5. While the amounts of light of respective light-emitting points of the first and second lines are the same in the former example, the amount of light of the second line of light-emitting points is two times that of the first line of light-emitting points in this embodiment.

With the amounts of light of the first and second lines of light-emitting points being different in this manner, the exposure state of four steps, i.e. "0", "1", "2" and "3" may be implemented. However, the amount of light of the first line of light-emitting points is set to the half of that the second line of light-emitting points, so that the accumulated light exposure is at most 1.5 times compared with the example of Fig.4. As a result, the example illustrated in Fig.4 is superior to this example in respect of printing speed of the printer.

While the optical printer head comprising two lines of light-emitting points is illustrated in this embodiment, three or more lines of light-emitting points may be used.

### Embodiment 2

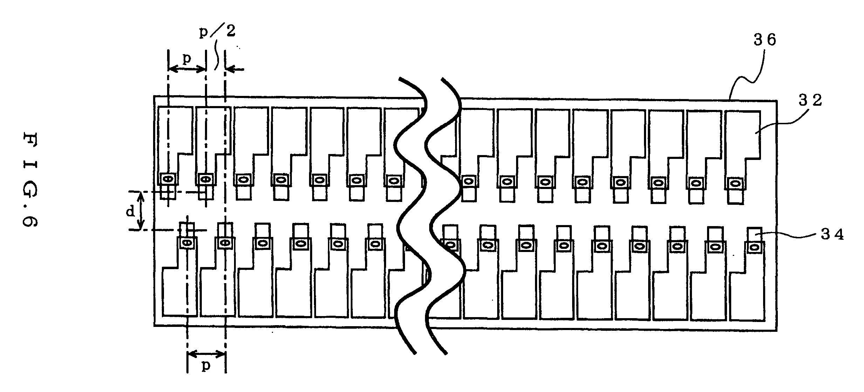

Referring to Fig.6, there is shown an LED array chip 36 which is used as an another example in an optical printer head. In the figure, reference numeral 32 designates a bonding pad, and 34 a light-emitting point.

In this embodiment, an optical printer head is structured by utilizing the LED array chip 36 comprising a first and second lines of light-emitting points arranged with the pitch "p" in a main-scanning direction and the pitch "d" in a sub-scanning direction. The first and second lines of light-emitting points are shifted by half pitch (p/2) to each other in a main-scanning direction as shown in the figure. It should be noted that the sub-scanning direction pitch "d" is selected so as to be integral multiples of resolution in a sub-scanning direction.

using the LED array chip having above-described structure, it may be possible to fabricate an optical printer head having pixel density in a main-scanning direction which is two times compared with the head in Fig.3.

### Embodiment 3

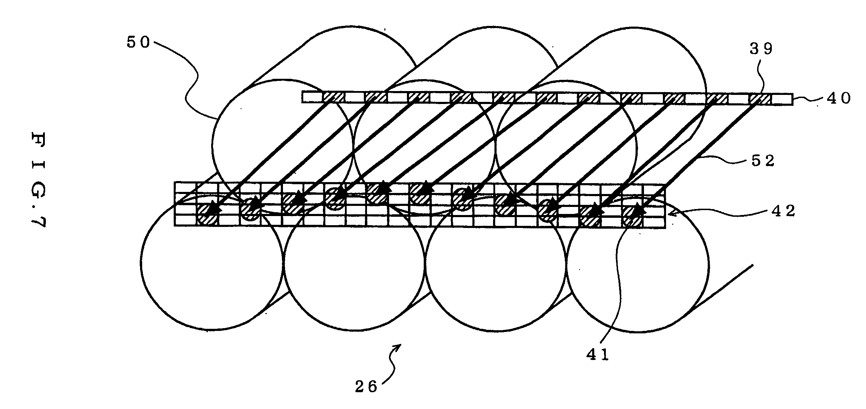

As shown in Fig.2, the light emitted from the light-emitting element array 24 impinges upon the photosensitive drum 2 through the rod-lens array 26. The rod-lens array 26 is structured by stacking rod-lenses alternately as shown in Fig.7.

The light 52 emitted from a line of light-emitting points 40 consisting of an array of LEDs 39 passes through the rod-lens array 26. The light 52 passed through the rod-lens array impinges upon the photosensitive drum 2 to form a line of light spots 42 each light spot being designated by reference numeral 41.

The line of light spots 42 may deviate from a straight line due to the influence by undulation of the rod-lens array 26. In order to correct the deviation of a line of light spots 42, an LED array as a light source is constructed by a plurality of lines of light-emitting points.

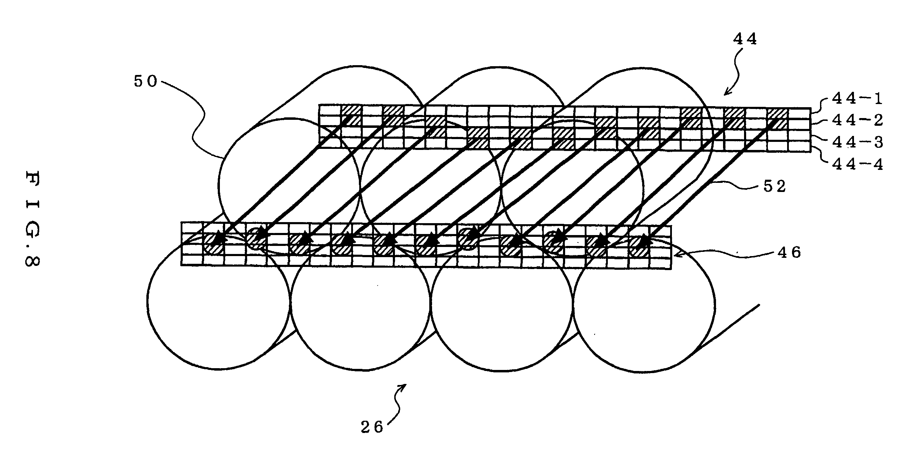

Fig.8 shows an embodiment comprising an LED array 44 consisting of four lines of light-emitting points 44-1, 44-2, 44-3 and 44-4. According to the present embodiment, two light-emitting points neighbored in a sub-scanning direction are lighted up at the same time to enable three steps of alignment for light spots. The hatching areas in the LED array 44 show the adjacent two light-emitting points lighted up at the same time, respectively. The hatching areas in a line of light spots 46 show the light impinged upon the photosensitive drum 2 passing through the rod-lens array 26, respectively.

As shown in Fig.8, a line of light spots which are arranged in a substantially straight line manner may be implemented by selecting the light-emitting points to be lighted up in the LED array 44 to correct the influence due to the modulation of the rod-lens array 26.

It is also possible to correct the deviation of a line of light spots due to the inclined attachment of the chips.

### Embodiment 4

While an LED array is used as an light-emitting element in the three embodiment described above, the case where a self-scanning light-emitting element array using three-terminal light-emitting thyristors is used for an optical printer head will be explained in this embodiment.

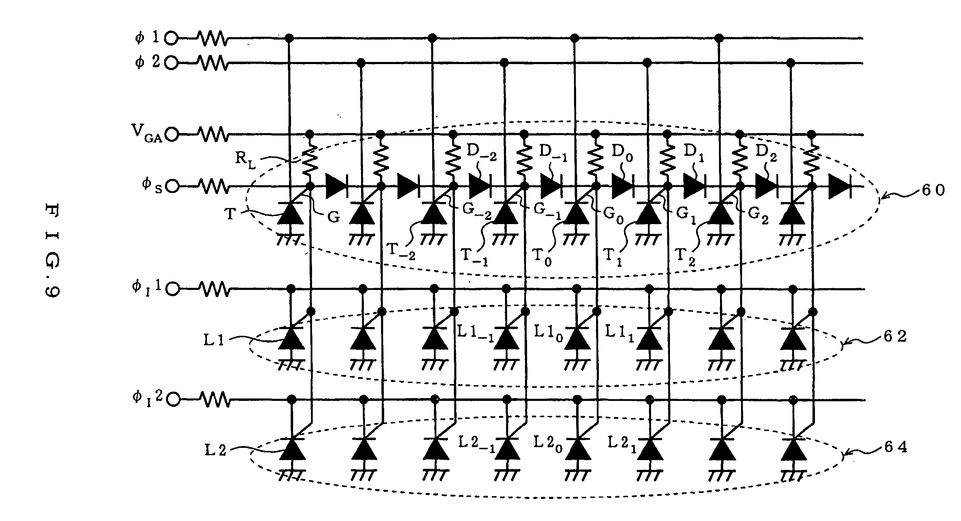

Referring to Fig.9, there is shown an equivalent circuit of a self-scanning light-emitting element array. This self-scanning light-emitting element array has been disclosed in Japanese Patent Publication No.2-263668 which is hereby incorporated by reference.

The self-scanning light-emitting element array in Fig.9 generally comprises a transfer portion 60, a first light-emitting portion 62, and a second light-emitting portion 64. The first light-emitting portion 62 corresponds to the first line of light-emitting points and the second light-emitting portion 64 corresponds to the second line of light-emitting points in the described-above embodiments.

The transfer portion 60 uses three-terminal light-emitting thyristor ..., T₋₁, T₀, T₁, .... A power supply voltage V_{GA} (-5V) is applied to each gate electrode ... G₋₁, G₀, G₁, ... of the thyristors through each load resistor R_{L}. Neighboring gate electrodes are electrically connected via each diode ... D₋₁, D₀, D₁, .... to obtain electrical interaction. Each of two transfer clock lines (φ1 and φ2) is connected to the anode electrode of each light-emitting thyristor on every other element. φₛ designates a start pulse in the figure.

The first and second light-emitting portions 62 and 64 comprise arrays of the three-terminal light-emitting thyristors (.., L1₋₁, L1₀, L1₁, ...), (..., L2₋₁, L2₀, L2₁, ...) as writing light-emitting elements. Respective gate electrodes of the light-emitting thyristors of the light-emitting portions 62 and 64 are correspondingly connected to the gate electrodes of the light-emitting thyristors of the transfer portion 60. Write signals φ_{I}1 and φ_{I}2 are connected to the cathodes electrodes of the light-emitting thyristors (..., L1₋₁, L1₀, L1₁, ...) and (..., L2₋₁, L2₀, L2₁, ...), respectively.

The operation of the transfer portion 60 will now be described. Assume that when the transfer clock φ1 is driven to a low level, the light-emitting thyristor T₀ is turned on. At this time, the voltage of the gate electrode G₀ is increased to a level near zero volts due to the characteristic of the three-terminal light-emitting thyristor. The gate voltage of each light-emitting thyristor is determined by the network of the resistors R_{L} and diodes ..., D₋₁, D₀, D₁, .... The gate voltage of a thyristor nearest to the light-emitting thyristor T₀ increases most, and the gate voltages of other thyristors decrease as they are further away from the thyristor T₀.

The voltage reducing effect works only in the rightward direction from the thyristor T₀ due to the unidirectionality and asymmetry of diode characteristics. That is, the gate electrode G₁ is set at a lower voltage with respect to G₀ by a forward rise voltage V_{dif} of the diode, while the gate electrode G₂ is set at a lower voltage with respect to G₁ by a forward rise voltage V_{dif} of the diode. On the other hand, current does not flow in the gate electrode G₋₁ on the left side of the thyristor T₀ because the diode D₋₁ is reverse-biased. As a result, the gate electrode G₋₁ is at the same potential as the power supply voltage V_{GA}.

Although the next transfer clock pulse φ2 is applied to the nearest light-emitting thyristors T₁, T₋₁, and T₃ and T₋₃, the thyristor having the highest turn-on voltage among them is T₁, whose turn-on voltage is approximately the gate voltage of G1 + V_{dif}, about twice as high as V_{dif}. The thyristor having the second highest turn-on voltage is T₃, about four times as high as V_{dif}. The turn-on voltage of T₋₁ and T₋₃ is about V_{GK} + V_{dif}.

It follows from the above discussion that by setting the low-level voltage of the transfer clock pulse to a level about twice to four times as high as V_{dif}, only the light-emitting thyristor T₁ is turned on to perform a transfer operation.

Next, the operation of the first light-emitting portion 62 be described. Assuming that the transfer element T₀ is in on-state, the voltage of the gate electrode G₀ is increased more than the power supply voltage V_{GA} (-5 volts) and is driven to about 0 volts. Therefore, if the voltage of the write signal φ_{I}1 is lower than the diffusion voltage (about 1 volt) of PN junction, the light-emitting thyristor L1₀ may be turned into an on-state (i.e., a light-emitting state).

On the other hand, the voltage of the gate electrode G₋₁ is about -5 volts, and the voltage of the gate electrode G₁ is about -1 volt. Consequently, the write voltage of the light-emitting thyristor L1₋₁ is about -6 volts, and the write voltage of the light-emitting thyristor L1₁ is about -2 volts. It is recognized from this that the voltage of the write signal φ_{I}1 which can write into only the light-emitting thyristor L1₀ is in a range of about -1 to -2 volts. When the light-emitting thyristor L1₀ is turned on, i.e., in the light-emitting state, there is no possibility that another light-emitting thyristor is selected and turned on.

The amount of light emitted from the thyristor is determined by a current due to the write signal φ_{I}1. Accordingly, the light-emitting elements may emit light at any desired amount of light. In order to transfer on-state to the next thyristor, it is necessary to turn off the thyristor in on-state by temporarily dropping the voltage of the write signal φ_{I}1 down to zero volts.

The operation of the light-emitting portion 64 is the same as that of the first light-emitting portion 62. Therefore, the explanation thereof will be omitted.

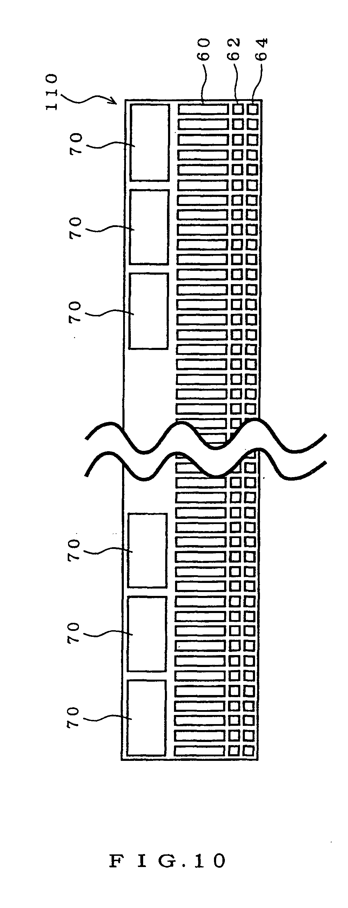

Referring to Fig.10, there is shown the self-scanning light-emitting element array chip 110 illustrated in Fig.9. Reference numeral 70 designates a bonding pad in the figure. In the chip 110, the transfer portion 60, the two lines of light-emitting points 62, 64, and a plurality of bonding pads 70 are formed. Such self-scanning light-emitting element array may be used in the optical printer head in the same manner as the LED array shown in Fig.3. In a conventional LED array, the light-emitting points and the bonding pads are connected one to one, so that when the number of lines of light-emitting points are plural, the number of bonding pads also becomes multiple of said number of lines. On the contrary, the number of bonding pads increases by one as the number of the lines of light-emitting points increases by one in the self-scanning light-emitting element array, resulting in the advantage such that the size of a chip is not increased.

### INDUSTRIAL APPLICABILITY

According to the present invention, as described above, two or more lines of light spots are provided in an optical printer head. As a result, following advantages may be obtained, i.e., (1) the light exposure may be increased, (2) the pixel density may be increased, (3) the deviation of a line of light spots due to the undulation of a rod-lens array and the inclined attachment of the chip, and (4) the printing speed of the printer may be increased.

## Claims

1. An optical printer head for exposing a photosensitive drum to form pixels thereon, comprising :
a light-emitting element array including two or more lines of light-emitting points, and
a rod-lens array for projecting light emitted from the light-emitting array onto the photosensitive drum to form a line of light spots.

2. The optical printer head of claim 1, wherein each of the lines of light-emitting points has the same pitch in a main-scanning direction in parallel with an axis of rotation of the photosensitive drum, and the light-emitting points of respective lines of light-emitting points are arranged so as to be lined up in a sub-scanning direction perpendicular to the axis of rotation of the photosensitive drum.

3. The optical printer head of claim 1, wherein each of the lines of light-emitting points has the same pitch in a main-scanning direction in parallel with an axis of rotation of the photosensitive drum, and the light-emitting points of respective lines of light-emitting points are arranged so as to be shifted in the main-scanning direction.

4. The optical printer head of claim 1, 2 or 3, wherein each of lines of light-emitting points is composed of an array of light-emitting diodes or an array of three-terminal light-emitting thyristors.

5. The optical printer head of claim 4, wherein the array of three-terminal light-emitting thyristors is composed of a light-emitting portion of a self-scanning light-emitting element array.

6. The optical printer head of claim 5, wherein the self-scanning light-emitting element array comprises :
a transfer portion having such a construction that a plurality of three-terminal light-emitting thyristor each having such a construction that a plurality of transfer elements each having a control electrode for controlling threshold voltage or current for transfer operation are arranged as transfer elements, said control electrodes of said transfer elements are connected to the control electrode of at least one transfer element located in the vicinity thereof via an electrically unidirectional electrical element, power-supply lines are connected to said transfer elements by load resistors, and clock pulse lines are connected to the transfer element ; and
a light-emitting portion having such a construction that a plurality of three-terminal light-emitting thyristor each having a control electrode for controlling threshold voltage or current are arranged as light-emitting elements, the control electrodes of said light-emitting element are connected to the control electrodes of the transfer elements by electrical means, and lines for applying current for light emission to the light-emitting element are provided.

7. A method of lighting up the light-emitting points in the optical printer head according to claim 2, comprising a step of selecting the lighting up of a plurality of light-emitting points lined up in the sub-scanning direction to vary the accumulated amount of light of the pixels.

8. The method of claim 7, wherein the amounts of light of the light-emitting points in the two or more lines of light-emitting points are all the same.

9. The method of claim 7, wherein the amounts of light of the light-emitting points in the two or more lines of light-emitting points are varied every a line of light-emitting points.

10. A method of lighting up the light-emitting points in the optical printer head according to claim 2, comprising a step of selecting the lighting up the light-emitting points in the two or more lines of light-emitting points to correct the deviation of the line of light spots on the photosensitive drum.

11. The method of claim 10, wherein said step of selecting the lighting up the light-emitting points is carried out by lighting up at the same time two light-emitting point neighbored in the sub-scanning direction.
